# EUROPEAN PATENT APPLICATION

(11) **EP 4 715 924 A1**
(43) Date of publication of application: **25.03.2026**
(21) Application number: 25772364.3
(22) Date of filing: 07.03.2025
(51) Int. Cl.: H01M 10/04, H01M 10/0585, H01M 10/052

(54) **ELECTRODE STACKING DEVICE FOR BATTERY CELL ASSEMBLY**

(30) Priority: 12.03.2024 US 202418602694
(71) Applicant: LG Energy Solution, Ltd., Seoul 07335 (KR)
(72) Inventor: LEE, Jeongbeom, Daejeon 34122 (KR); CHOI, Seong Won, Daejeon 34122 (KR); KIM, Yeeun, Daejeon 34122 (KR); KIM, Ji Young, Daejeon 34122 (KR); SONG, Min Sang, Daejeon 34122 (KR)
(74) Representative: Goddar, Heinz J.
(86) International application number: PCT/KR2025/003023
(87) International publication number: WO 2025/192925

(57) **Abstract**

An electrode stacking device includes a battery frame configured to stack at least one electrode and a separator, the battery frame including: a base part configured to support the at least one electrode and the separator; and a guide part provided on one side of the base part, the guide part including: a first guide part having at least one first accommodation part configured to accommodate an electrode terminal part of the at least one electrode; and a second guide part having at least one second accommodation part configured to accommodate an auxiliary guide part. The first guide part and the second guide part are located at opposite ends of the base part.

## Description

### BACKGROUND

### Cross-citation with Related Applications

This application claims the benefit of priority to US Patent Application No. 18/602,694 filed March 12, 2024, the disclosures of which are incorporated herein by reference in their entirety.

### Technical Field

The present invention relates to an electrode stacking device for a battery cell assembly, and more particularly, to an electrode stacking device used to manufacture an electrode stacking type electrode assembly.

### Discussion of the Related Art

Secondary batteries may be classified in various ways depending on a structure of an electrode assembly. For example, secondary batteries may be classified into a stack-type structure, a winding-type (jelly roll-type) structure, or a stack/folding-type structure. In the case of the stack-type structure, a cathode, a separator, and an anode are cut to a predetermined size and then stacked to form the electrode assembly. In this case, the separator is disposed between the cathode and the anode. In the case of the winding-type structure, the cathode, the separator, the anode, and the separator are formed in a sheet shape, and then are sequentially stacked and wound to form the electrode assembly. In the case of the stack/folding-type structure, full cells or bicells are first formed, and then are wound through a separator sheet to form the electrode assembly. The cathode, the separator, and the anode may be cut to a predetermined size and then stacked in order to form the full cells or bicells.

Meanwhile, detailed information of the electrode assembly having the stack-type structure is disclosed in Korean Patent No. 10-1163053.

A multi-stage stacked electrode assembly according to the related art includes one or more first basic units having a first size, one or more second basic units that have a second size larger than the first size and have the first basic units 21 stacked thereon, and one or more third basic units 23 that have a third size larger than the second size and have the second basic units 22 stacked thereon.

However, the multi-stage stacked electrode assembly 20 according to the related art has a problem in that it is difficult to precisely position stacking positions of the first, second, and third basic units when stacking the basic units.

In order to manufacture such a stack-type electrode assembly to a certain standard, electrodes should be stacked in a state in which they are aligned. When the electrode assembly is manufactured with the electrodes not properly aligned, the electrode assembly may not be accommodated in a battery case. In addition, the electrode assembly manufactured with electrodes not properly aligned has the disadvantage of low energy density and low energy efficiency.

Nevertheless, research on technology for aligning electrodes to manufacture the above-described stack-type electrode assembly are still not properly conducted.

### SUMMARY OF THE DISCLOSURE

The present invention provides an electrode stacking device for assembling battery cells with excellent alignment by uniformly aligning an electrode and a separator.

In addition, the present invention provides an electrode stacking device capable of ensuring excellent cell performance in manufacturing a battery where high pressure is essential even when assembled and driven by applying high pressure.

It may be easily appreciated that other objects and advantages of the present disclosure may be realized by means or methods described in the claims and a combination thereof.

An object of the present invention is to provide an electrode stacking device.

According to an aspect of the present invention, an electrode stacking device includes: a battery frame configured to stack at least one electrode and a separator, in which the battery frame may include a base part configured to be seated the at least one electrode and the separator, and a guide part located at one side of the base part. The guide part may include: a first guide part having at least one first accommodation part configured to accommodate an electrode terminal part of the at least one electrode and a second guide part having at least one second accommodation part configured to accommodate at least one auxiliary guide part. The first guide part and the second guide part may be located at opposite ends of the base part.

In addition, the first guide part and the second guide part may be disposed to face each other, form a spaced apart space, and may be spaced apart from each other.

In addition, the electrode and the separator are disposed in the spaced apart space.

In addition, the second guide part may have a pair of side walls facing each other.

In addition, each side wall of the second guide part may include the at least one second accommodation part configured to accommodate at least one auxiliary guide part.

In addition, the base part may include a detachment groove configured to enable detachment of the at least one electrode and the separator.

In addition, the base part and the guide part may be formed integrally.

In addition, the battery frame may further include the at least one auxiliary guide part that is detachable from the second guide part.

In addition, the at least one electrode may include a cathode and an anode, and the at least one auxiliary guide part may include: a first auxiliary guide part having a third accommodation part configured to accommodate the cathode; and a second auxiliary guide part having a fourth accommodation part configured to accommodate the anode.

The at least one auxiliary guide part may include a fastening protrusion and a fastening groove configured to be coupled to the second guide part.

The electrode stacking device of the present invention can produce an electrode stack with excellent alignment by uniformly aligning electrodes and separators.

Additionally, the electrode stacking device of the present invention can produce an electrode stack that can secure excellent cell performance.

### BRIEF DESCRIPTION OF THE DRAWINGS

FIG. 1 is a configuration diagram of an electrode stack that may be manufactured through an electrode stacking device according to an embodiment of the present invention.
FIG. 2 is a perspective view of the electrode stacking device according to the embodiment of the present invention.
FIG. 3 is a perspective view of the electrode stacking device according to the embodiment of the present invention.
FIG. 4 is a perspective view of the electrode stacking device according to the embodiment of the present invention.
FIG. 5 is a perspective view of the electrode stacking device according to the embodiment of the present invention.
FIG. 6 is a perspective view of the electrode stacking device according to the embodiment of the present invention.
FIG. 7 is a diagram illustrating a use type of the electrode stacking device according to an embodiment of the present invention.
FIG. 8 is a diagram illustrating a use type of the electrode stacking device according to an embodiment of the present invention.

### DETAILED DESCRIPTION OF THE EMBODIMENTS

Hereinafter, the present invention will be described in detail. The terms or words used in the present specification and claims are not to be construed as a general or dictionary meaning, but are to be construed as meaning and concepts consistent with the technical ideas of the present invention based on a principle that the present inventors may appropriately define the concepts of terms in order to describe their inventions in best mode. Therefore, configurations described in exemplary embodiments and the accompanying drawings of the present invention do not represent all of the technical spirits of the present invention, but are merely most preferable embodiments. Therefore, the present invention should be construed as including all the changes, equivalents, and substitutions included in the spirit and scope of the present invention at the time of filing this application.

Accordingly, the present invention is not limited to the exemplary embodiments described below, and may be implemented in various different forms. In addition, in the accompanying drawings, sizes, thicknesses, and the like, of devices may be exaggerated for convenience. Same reference numerals denote same constituent elements throughout the specification.

Throughout the specification of the present application, when a part "comprise(s) or include(s)" a component, it means that other components may be further included rather than excluding other components unless explicitly described otherwise.

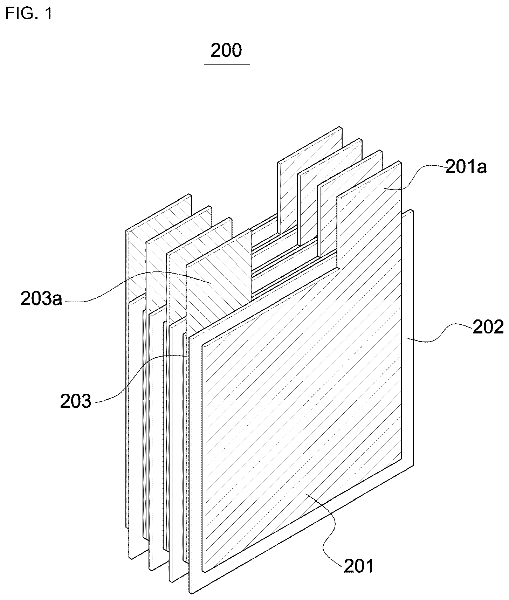

Hereinafter, prior to a detailed description of an electrode stacking device according to an embodiment of the present invention 1, an electrode assembly manufactured through the electrode stacking device will first be briefly described with reference to FIG 1.

FIG. 1 is a configuration diagram of an electrode stack that may be manufactured through an electrode stacking device according to an embodiment of the present invention.

Referring to FIG. 1, an electrode stack 200 may include a cathode 201, a separator 202, and anode 203 that are sequentially stacked. Herein, the cathode 201 may include an active material capable of reversibly doping lithium ions or anions, such as activated carbon. In addition, the anode 203 may include an active material capable of reversibly doping lithium ions, such as graphite. The separator 202 may be made of an insulating material such as cellulose, polyethylene, and polypropylene. However, in the embodiment of the present invention, the material constituting the cell stack is not limited.

In addition, an electrode terminal part connected to the electrode of the electrode stack 200 may be disposed. Herein, the electrode terminal part may include a cathode terminal part 201a protruding from an upper end of the cathode 201 and an anode terminal part 203a protruding from an upper end of the anode 203. In this case, the cathode terminal part 201a and the anode terminal part 203a are spaced apart from each other and may be disposed at opposite sides of the electrode stack 200, respectively.

In addition, the separator 202 may be disposed between the cathode 201 and the anode 203, and may have a larger area than the cathode 201 and the anode 203.

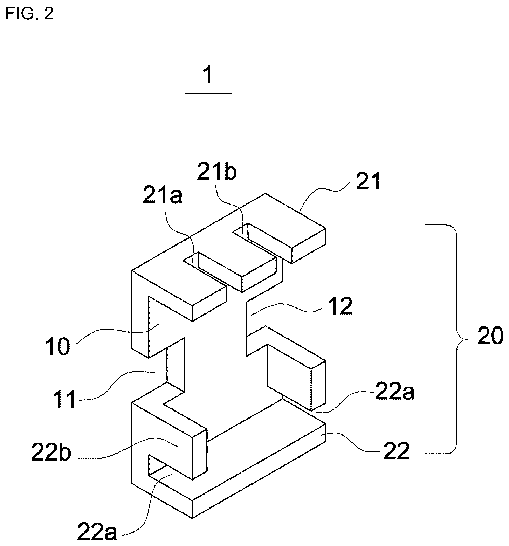

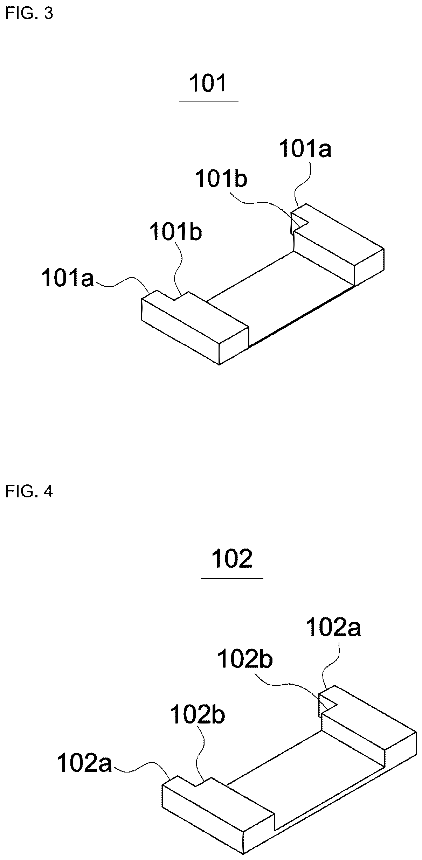

Hereinafter, the electrode stacking device according to an embodiment of the present invention will be described in detail with reference to FIGS. 2 to 4.

FIGS. 2 to 4 are perspective views of the electrode stacking device according to an embodiment of the present invention.

Referring to FIG. 2, the electrode stacking device according to an embodiment of the present invention may include a battery frame 1 on which an electrode and a separator can be stacked.

The battery frame 1 may include a base part 10 on which the electrode and the separator are mounted, and a guide part 20 provided on one side of the base part.

The base part 10 may have the electrode and the separator mounted thereon.

The base part 10 may include detachment grooves 11 and 12 that allow the mounted electrode and separator to be detachable. Herein, the detachment groove makes it easy to detach the electrode stack in which the electrode and separator are stacked.

The guide part 20 may include a first guide part 21 having at least one first accommodation part that is provided to accommodate the electrode terminal part and a second guide part 22 having at least one second accommodation part that is provided to accommodate the auxiliary guide part. Herein, the guide part 20 may allow alignment of the electrode and separator mounted on the base part up and down or left and right.

The first guide part 21 may include at least one first accommodation part that is provided to accommodate the electrode terminal parts 201a and 203a.

The first accommodation part may include a 1-1st accommodation part 21a that is provided to accommodate the cathode terminal part and a 1-2nd accommodation part 21b that is provided to accommodate the anode terminal part. Herein, an accommodation direction of the cathode terminal part and the anode terminal part of the 1-1st accommodation part 21a and the 1-2nd accommodation part 21b may change according to the stacking order and/or direction of the cell stack. For example, the 1-1st accommodation part 21a may accommodate the anode terminal part according to the stacking order and/or direction of the cell stack, and the 1-2nd accommodation part 21b may accommodate the cathode terminal part. Herein, the 1-1st accommodation part 21a and the 1-2nd accommodation part 21b may be disposed to be spaced apart from each other.

A width of the 1-1st accommodation part 21a and the 1-2nd accommodation part 21b may be the same as the width of the electrode terminal part.

The second guide part 22 may have side walls(22b) formed on both sides facing each other.

The second guide part 22 may include at least one second accommodation part 22a that is provided to accommodate the auxiliary guide part.

The second guide part 22 may include the second accommodation part 22a provided on opposite sides of one side of the side walls(22b) to accommodate the auxiliary guide part.

The second accommodation part 22a may be configured to accommodate the auxiliary guide part by combining a fastening protrusion and a fastening groove of the auxiliary guide part.

The first guide part 21 and the second guide part 22 may be disposed to face each other on different sides of the base part 10.

The first guide part 21 and the second guide part 22 may be disposed to face each other, form a spaced apart space, and be spaced apart from each other. In addition, the electrode and the separator are disposed in the spaced apart space.

For example, the first guide part 21 and the second guide part 22 may be arranged to be spaced apart by a distance in the longitudinal direction of the separator. Here, the longitudinal direction of the separator may mean the direction in which the length of the separator is longer.

The base part 10 and the guide part 20 may be formed integrally.

The electrode frame 1 may further include an auxiliary guide part that is detachable from the second guide part 22. Herein, the auxiliary guide part may align the electrode mounted on the base part up and down.

The auxiliary guide part may include a first auxiliary guide part 101 having a third accommodation part that is provided to accommodate the cathode, and a second auxiliary guide part 102 having a fourth accommodation part that is provided to accommodate the anode.

The first auxiliary guide part 101 may be attached to the second guide part 22 to precisely align the anode up and down.

The second auxiliary guide part 102 may be attached to the second guide part 22 to precisely align the cathode up and down.

Herein, in manufacturing the cell stack, the sizes of the cathode and anode are generally different. In particular, since the size of the cathode is smaller than that of the anode, the electrode stacking device according to an embodiment of the present invention may precisely align the electrodes up and down by applying different auxiliary guide parts depending on the size of the cathode and anode.

The first auxiliary guide part 101 may include a fastening protrusion 101a and a fastening groove 101b to be coupled to the second guide part 22.

The second auxiliary guide part 102 may include a fastening protrusion 102a and a fastening groove 101b to be coupled to the second guide part 22.

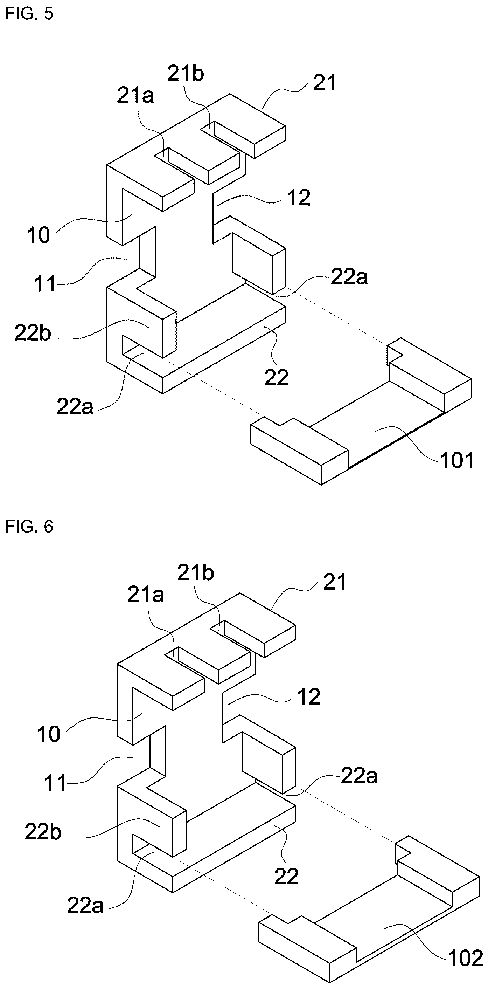

FIGS. 5 and 6 are perspective views of the electrode stacking device according to an embodiment of the present invention.

Referring to FIGS. 5 and 6, in manufacturing the electrode stack, an electrode stacking device according to an embodiment of the present invention may be used by combining the electrode frame 1 and the first auxiliary guide part 101.

In addition, in manufacturing the electrode stack, the electrode stacking device according to an embodiment of the present invention may be used by combining the electrode frame 1 and the second auxiliary guide part 102.

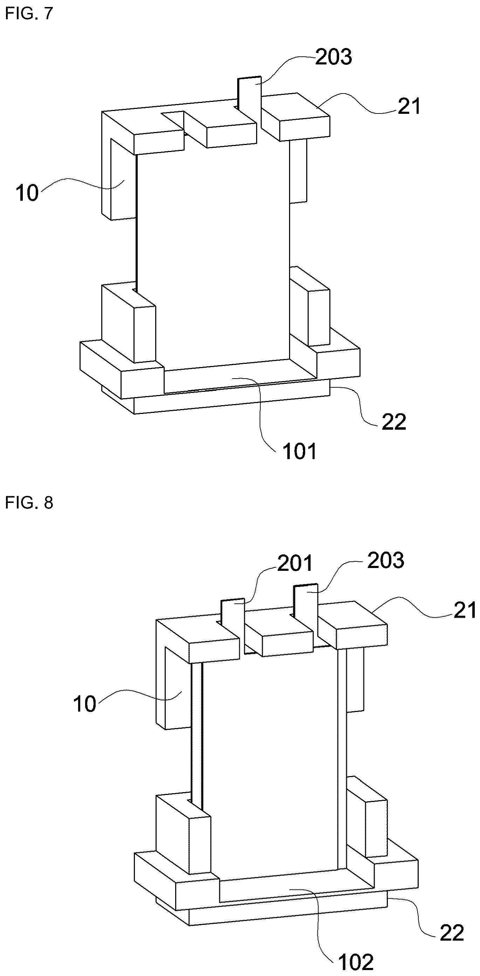

FIGS. 7 and 8 are diagrams illustrating a use type of the electrode stacking device according to an embodiment of the present invention.

Referring to FIGS. 7 and 8, in manufacturing the electrode stack, in the electrode stacking device according to an embodiment of the present invention, the anode 203 may be stacked while the electrode frame 1 is combined with the first auxiliary guide part 101. In addition, after detaching the first auxiliary guide part 101 from the electrode frame 1, the separator 202 may be stacked. In addition, the cathode 201 may be stacked while the second auxiliary guide part 102 is combined with the electrode frame 1. The stacking order of the electrodes is not limited thereto.

According to an electrode stacking device of the present invention, it is possible to produce an electrode stack with excellent alignment by uniformly aligning an electrode and a separator.

In addition, according to the electrode stacking device of the present invention, it is possible to produce an electrode stack capable of securing excellent cell performance.

## Claims

1. An electrode stacking device, comprising:
a battery frame configured to stack at least one electrode and a separator, the battery frame including:
a base part configured to be seated the at least one electrode and the separator; and
a guide part located at one side of the base part, the guide part including:
a first guide part having at least one first accommodation part configured to accommodate an electrode terminal part of the at least one electrode; and
a second guide part having at least one second accommodation part configured to accommodate at least one auxiliary guide part,
wherein the first guide part and the second guide part are located at opposite ends of the base part.

2. The electrode stacking device of claim 1, wherein the first guide part and the second guide part are disposed to face each other, form a spaced apart space, and are spaced apart from each other.

3. The electrode stacking device of claim 2, wherein the electrode and the separator are disposed in the spaced apart space.

4. The electrode stacking device of claim 1, wherein the second guide part has a pair of side walls facing each other.

5. The electrode stacking device of claim 4, wherein each side wall of the second guide part includes the at least one second accommodation part configured to accommodate at least one auxiliary guide part.

6. The electrode stacking device of claim 1, wherein the base part includes a detachment groove configured to enable detachment of the at least one electrode and the separator.

7. The electrode stacking device of claim 1, wherein the base part and the guide part are formed integrally.

8. The electrode stacking device of claim 1, wherein the battery frame further includes the at least one auxiliary guide part that is detachable from the second guide part.

9. The electrode stacking device of claim 8, wherein the at least one electrode includes a cathode and an anode, and
wherein the at least one auxiliary guide part includes:
a first auxiliary guide part having a third accommodation part configured to accommodate the cathode; and
a second auxiliary guide part having a fourth accommodation part configured to accommodate the anode.

10. The electrode stacking device of claim 8, wherein the at least one auxiliary guide part includes a fastening protrusion and a fastening groove configured to be coupled to the second guide part.
